Europäisches Patentamt

European Patent Office

Office européen des brevets

(19)

(11) Publication number: 0 182 530
A2

(12) # EUROPEAN PATENT APPLICATION

(21) Application number: 85307990.3

(22) Date of filing: 04.11.85

(51) Int. Cl.⁴: H 01 B 13/30, H 01 B 7/28

(30) Priority: 16.11.84 GB 8429077

(43) Date of publication of application: 28.05.86
Bulletin 86/22

(84) Designated Contracting States: AT BE CH DE FR IT LI
LU NL SE

(71) Applicant: STC plc, 190 Strand, London, WC2R 1DU (GB)

(72) Inventor: Simpson, Walter Eric, 6 Church Path, Gt
Amwell Ware, Herts (GB)
Inventor: Bury, John Robert Ivor, 17 Greenways, Nr
Halstead Essex (GB)
Inventor: Joiner, Dudley Arnold, Ashdown Cottage
Linden Chase, Uckfield East Sussex (GB)

(74) Representative: Capsey, Sydney Ross, Standard
Telephones and Cables Patent Department Edinburgh
Way, Harlow Essex CM20 2SH (GB)

(54) Improvements in cables.

(57) A water blocking thixotropix hydrophobic compound for
cables comprises a synthetic oil or a mixture of synthetic and
mineral oils thickened to a gel by the addition of silica or benton-
ite. The gel properties of the compound may be temporarily re-
moved by mechanical shearing to allow filling of a cable. An ap-
paratus for cable filling is also described.

- 1 -

W.E. Simpson-J.R.I. Bury-
D.A. Joiner 19-3-1

## IMPROVEMENTS IN CABLES

This invention relates to water blocking compositions, e.g. for use in cables, and to apparatus for the manufacture and use of such compositions.

Water blocking compositions are commonly used in telecommunications cables to prevent the ingress of moisture. These compositions are generally highly viscous at ambient temperature and require heating prior to application to a cable. Since large cables have a high thermal mass it is not normally possible to apply the water blocking material in a single operation. Typically the material is applied to individual insulated conductors or fibres, or to groups of such components, which are subsequently stranded and sheathed to form the finished cable. The cable manufacturing process could of course be greatly improved if the application of the water blocking compound could be effected as a single operation on the stranded cable. Conventional hot filling processes have a number of inherent disadvantages. In particular the volume change on subsequent cooling can result in sufficient contraction to introduce voids in the cable. Furthermore the high temperatures required can degrade the insulation applied to the cable component. A further disadvantage of such process is that, under high temperature conditions in service, the blocking material may drain from the cable. In an attempt to overcome this problem cable fillers with thixotropic properties have been developed. These materials are pumpable at room temperature and comprise a mineral oil together with a silica gellant. Such a composition is described in our UK Patent No. 1,399,350. Whilst such compositions reduce the constraints on cable filling techniques they are unsuitable for optical cables as their performance at low temperatures is poor. At low service temperatures such gels thicken substantially and any bending of the cable can then put excessive strain on the constituent fibres. Attempts have been made to overcome this problem by using low viscosity mineral oils, but this results in poor high temperature properties. The material does not then act as a suitable buffering medium for the fibres and can also leak from the cable.

The object of the present invention is to minimise or to overcome these disadvantages.

According to one aspect of the invention there is provided a water blocking compound for a cable, the compound being hydrophobic and having thixotropic properties such that the viscosity of the compound may be temporarily reduced by mechanical shearing, characterised in that the compound includes a base fluid comprising a synthetic oil or a mixture of synthetic and mineral oils, and a thixotropic agent comprising a hydrophobic silica, bentonite or mixtures thereof.

According to another aspect of the invention there is provided an apparatus for water blocking a cable with a thixotropic hydrophobic material, the apparatus including means for mechanically shearing the material, and means for injecting the sheared material into a cable.

According to a further aspect of the invention there is provided an applicator for applying a thixotropic water blocking material to an unsheathed cable, characterised in that the apparatus includes an elongate tubular chamber through which, in use, the cable is fed, that means are provided for supplying the compound under pressure to said chamber whereby the cable is filled with a compound, that a first pair of end seals provide sealing between the cable and the chamber whereby fluid pressure is maintained in the chamber, that a further pair of end seals define, with said first pair, secondary chambers one at each end of the tubular chamber, and that means are provided for removing excess compound from the secondary chambers.

The materials described herein exhibit their thixotropic properties over a wide temperature range that includes ambient temperature. In particular the materials retain their flexible properties and do not harden at service temperatures as low as $-55^{O}C$. Thus, a single water blocking material may be employed for arctic, temperate and tropical applications.

It might be thought that the hydrophobic properties of the base fluid could permit the use of a hydrophilic silica, e.g. of the type that has been employed as the thixotropic agent in greases and lubricants. Surprisingly we have found that, even though the base fluid itself is hydrophobic, it is essential to use a hydrophobic silica for the compositions described herein. It has been found that compositions containing non-hydrophobic silica are unstable in the presence of moisture, the water bonding to the silica surface and causing separation of the silica from the oil.

Typically the silica is rendered hydrophobic by treating the surface of each particle with a siloxane. This provides a stable bond to the oils contained in the base fluid. It is thought that the siloxane acts as a coupling agent.

The effect of the synthetic oil in the compound is to extend the temperature range, and in particular the low temperature range, of the material. Increasing the proportion of the synthetic oil in the base fluid lowers the minimum working temperature of the compound. We have found that the synthetic oil is fully compatible with the

- 4 -

thixotropic agents employed herein. It will be appreciated by those skilled in the art that providing compatibility between a base fluid and a thixotropic thickener, particularly where a range of base fluid compositions is employed, can be difficult to achieve.

Embodiments of the invention will now be described with reference to the accompanying drawings in which:-

Fig. 1 shows in schematic form a batch processing apparatus for preparing the water blocking material;

Fig. 2 shows an apparatus for preparing the material by a continuous process;

Fig. 3 is an apparatus for applying the water blocking material to a cable;

Fig. 4 is a sectional view of the injector head of the applicator of Fig. 3,

and Fig. 5 shows an alternative injector head.

The water blocking compositions include a synthetic hydrocarbon-based fluid which may contain an antioxidant of the same type as that used in the insulation of a cable that is to be filled. This base fluid is thickened to a gel by the addition of thickener comprising e.g. a hydrophobic grade of pyrogenic silica or bentonite or mixtures thereof. We have found that such compositions have a gel structure which structure can be temporarily broken down by mechanical action, e.g. by shearing, thus significantly reducing the viscosity of the compound. When static the structure regenerates itself and the original gel properties are recovered.

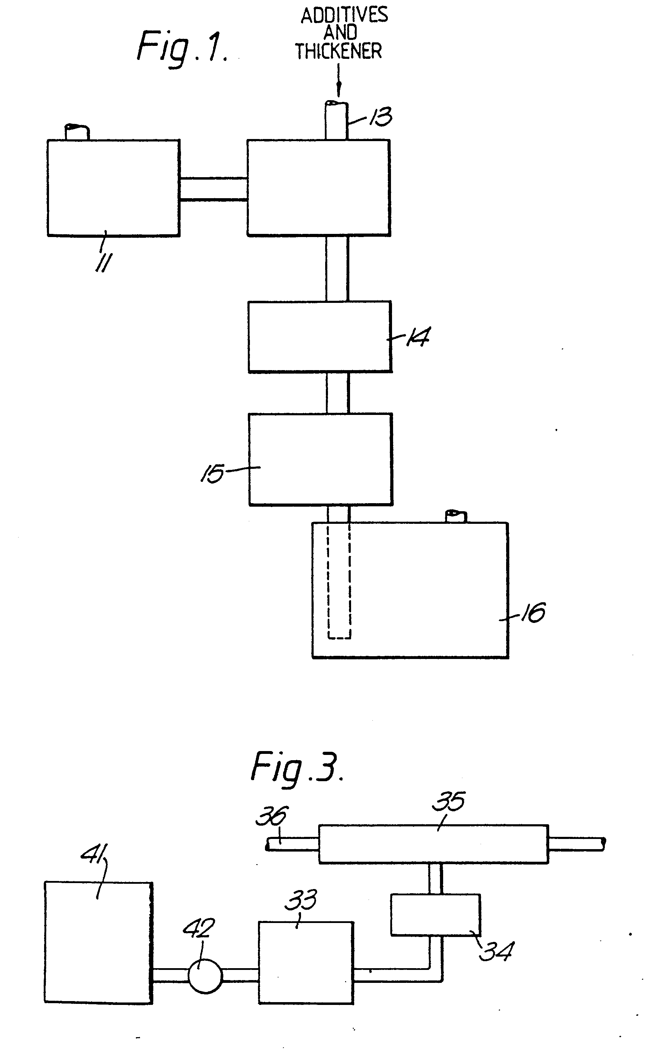

An apparatus for manufacturing the water blocking material is illustrated in Fig. 1 of the accompanying drawings. The component oils forming the base fluid are supplied from storage tanks (not shown) to a mixer tank 11 where the fluid is subjected to high shear at a temperature not exceeding $130^{\circ}C$ for sufficient time to provide an homogeneous fluid. The fluid is transferred to a plough shear mixer 12, typically at a temperature not exceeding 80°C, and is mixed with the desired additives. Vacuum is then applied to the plough shear mixer 12 and a gel forming powder, e.g. silica or bentonite, is admitted through inlet 13. Vacuum is maintained during mixing to facilitate deaeration. When further deaeration is required, the mixture thus formed may be transferred to a deaerater 14 and thence to a high pressure homogeniser 15. This develops the necessary thixotropic gel properties of the material by thorough dispersion of the powder thickener. The homogeniser may be replaced by a colloid mill or a ball mill. Finally the finished material is transferred from the homogeniser to a storage tank 16.

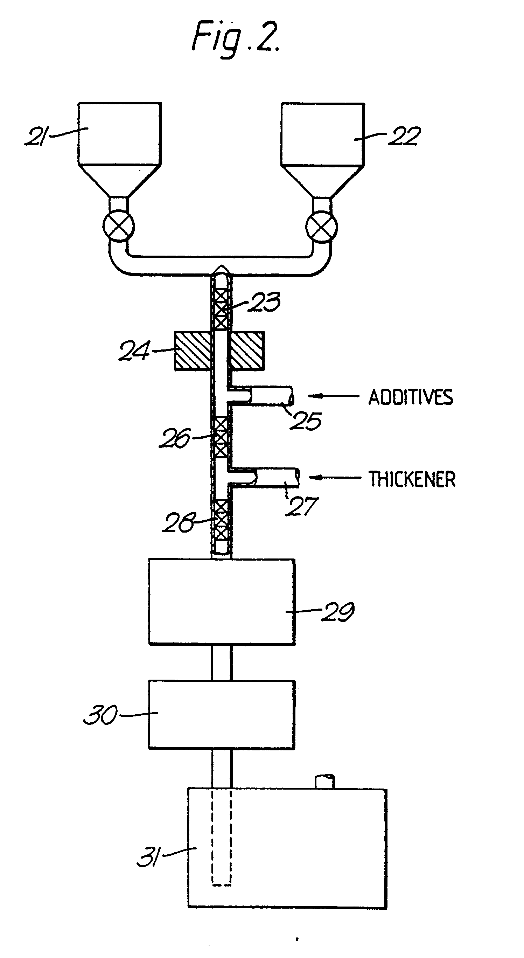

An apparatus for continuous processing of the water blocking material is shown in Fig. 2. The base fluid components are supplied from storage tanks 21, 22 via a static mixer 23 to a heat exchanger 24 where the temperature does not exceed 130°C. Additives are supplied via a first side entry tube 25 and are dispersed in a second static mixer 26. The thickening agent is auger fed via a second side entry tube 27 and the mix is passed through a third static mixer 28 to a homogeniser 29 where high shear is applied to disperse the thickener thus imparting thixotropic gel properties to the material. The homogenised material is then transferred via a deaerater 30 to a storage tank 31.

Typically the base fluid comprises a synthetic oil or mixtures of a synthetic oil and a mineral oil. Advantageously, the synthetic oil comprises at least 10% of the mixture. The quantity of synthetic oil in the mixture determines the service temperature range. Thus for high quality applications such as optical cable filling, the base fluid should consist solely of a synthetic oil. To 100 parts by weight of this base fluid is added 5 to 20 parts of a hydrophobic (fumed) silica or 2 to 10 parts of bentonite or equivalent mixtures thereof and, advantageously, up to 2 parts of a polarising agent, e.g. propylene carbonate and up to 1 part of an antioxidant/stabiliser. Advantageously the material may also include up to 10% and preferably not more than 5% of a polymeric dielectric stabiliser for which purpose we prefer to employ finely divided PTFE. Preferably the thickener comprises 10 to 17 parts of silica based on the weight of the base fluid. In some applications the thickener may comprise 5 to 10 parts and advantageously 4 to 7 parts by weight of bentonite.

Typically the synthetic oil comprises a poly-$\alpha$-olefin, e.g. SYNFLUID manufactured by the Gulf Oil Chemicals Company. This has a viscosity of 8 centistokes at 100$^{\circ}$C. Other synthetic oils can of course be used. For example, in some applications the synthetic oil may comprise a silicone oil.

A particularly advantageous material has the following composition, all parts being quoted by weight:

| | |
|---|---|
| Poly-$\alpha$-olefin | 83 |
| Silica | 14 |
| Propylene carbonate | 1.75 |
| Phenolic antioxidant | 0.25 |
| PTFE | 1 |

The material, after mixing and homogenising as described above, was treated by a number of standard procedures for cable fillers. The results are summarised in Table 1 below.

Table 1

| Properties | Method | |
|---|---|---|
| Density (g/ml) | Density column | 0.892 |
| Drop point ($^O$C) | BS 5087 | >180$^O$* |
| Slump at 80$^O$C (%) | After 120 hours | 0.3 |
| Cone penetration at 23$^O$C (dmm) | BS 2000 Part 179 | 280 |
| Cone penetration at 0$^O$C (dmm) | BS 2000 Part 179 | 230 |
| Cone penetration at -20$^O$C (dmm) | BS 2000 Part 179 | 200 |
| Cone penetration at -40$^O$C (dmm) | BS 2000 Part 179 | 170 |
| Low temperature flexibility ($^O$C) | Thin film bend test | Passed -45$^O$C |
| Permittivity at 23$^O$C | Tinsley Cell-type 4536 | 1.9 |
| Permittivity at 100$^O$C | Tinsley Cell-type 4536 | 1.9 |
| Volume resistivity at 23$^O$C (ohm cm) | Tinsley Cell-type 4536 | $1 \times 10^{17}$ |
| Volume resistivity at 100$^O$C (ohm cm) | Tinsley Cell-type 4536 | $1 \times 10^{17}$ |
| Hydrogen generation (cm$^3$/g) | 2000 hours at 23$^O$C | 0.0005 |
| Hydrogen generation (cm$^3$/g) | 2000 hours at 80$^O$C | 0.002 |

* Compound is non-melting

As well as measuring these properties compatibility tests have been carried out in combination with commonly used cable materials.

Dumb-bell test specimens in accordance with BS 2782, Method 320A were prepared from a typical MDPE and HDPE (medium density polyethylene and high density polyethylene) insulation polymer and immersed in the filling compounds for 14 days at 70°C. Also, dumb-bells were prepared from a Nylon 12 widely used for secondary coating of optical fibres. The resulting absorption of the compound by the polymer was determined together with its effect on polymer tensile properties.

Table 2 summarizes the results of these tests.

## Table 2

| Polymer | Sample | Weight Increase (%) | Yield Stress (MPa) | UTS (MPa) | EB (%) |
|---------|--------|---------------------|--------------------|-----------|--------|
| MDPE | Unaged control | - | 18 | 13 | 460 |
|  | Aged control | -0.2 | 18 | 13 | 260 |
|  | Gel pretreated | 3.2 | 17 | 13 | 400 |
| HDPE | Unaged control | - | 24 | 13 | 210 |
|  | Aged control | -0.2 | 24 | 13 | 270 |
|  | Gel pretreated | 1.6 | 23 | 13 | 220 |
| PA 12 | Unaged control | - | 41 | 46 | 230 |
|  | Aged control | -0.4 | 46 | 49 | 250 |
|  | Gel pretreated | 0.1 | 46 | 47 | 260 |

Oxidative induction time (OIT) has been determined on 0.5/ 0.9 mm extruded insulation using the test procedure given in Section 3.10 of REA specification PE-39. This requires that the insulation is conditioned in the filling compound for 8 hours at 68$^{\circ}$C prior to a Differential Scanning Calorimetry (DSC) measurement of OIT on a sample in a copper pan at 199$^{\circ}$C, using in this case a DuPont 1090 Thermal Analyzer. Typical results are summarized in Table 3 below.

### Table 3 - Oxidative Induction Time

| Filling Compound | | Oxidative Induction Time (minutes) | |
|---|---|---|---|
| | | MDPE | HDPE |
| Control | | 60 | 43 |
| Present compounds | Sample 1 | 23 | 35 |
| | Sample 2 | 46 | 43 |

Resistance to thermal ageing of the MDPE and HDPE insulation after immersion in the filling compounds has been determined using the test method described in Appendix E of British Telecom specification M142. This involves immersion of the insulated conductor (0.5/0.9mm) in the filling compound for 14 days at 60$^{\circ}$C prior to oven ageing at 105$^{\circ}$C, in this case for a period of 1000 hours. The "wrap test" as specified in M142 was then carried out on the aged insulation. There was no evidence of cracking of the polymer.

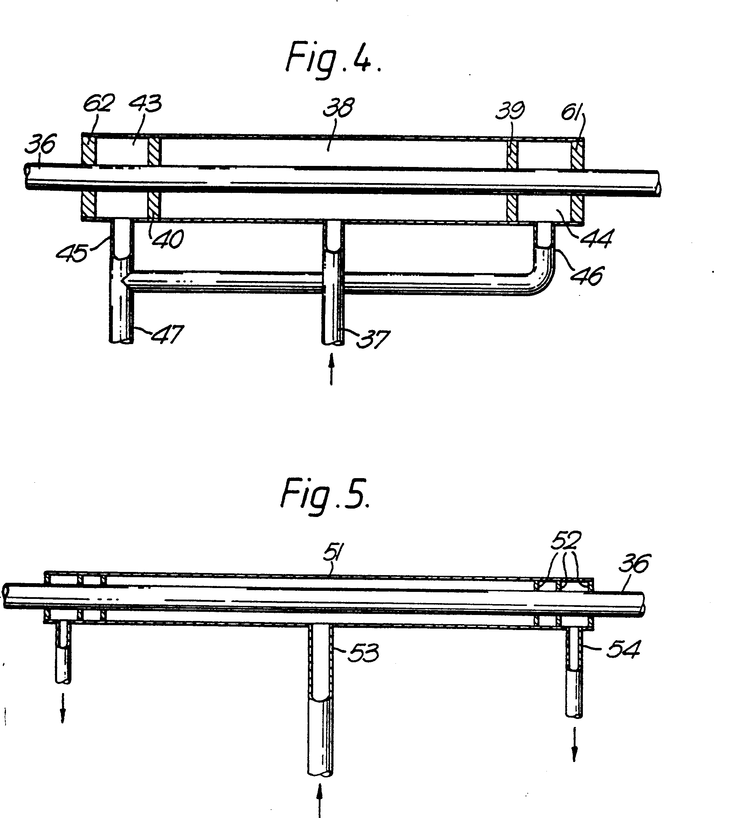

Rheological tests have also been carried out on these materials. The results of these tests also confirm that viscosity is relatively independent of temperature. As the viscosity of the water blocking materials may be temporarily reduced by mechanical working, the materials are particularly suitable for filling telecommunication or power cables at ambient temperature. Moreover, as the material is at the same temperature as the cable, the thermal mass of the cable does not affect the filling process and it is possible to fill large cables in a single operation. An apparatus for this purpose is shown in Figs. 3 and 4 of the accompanying drawings. Referring to Fig. 3, the water blocking material is supplied from a storage drum 41 via a pump 42, typically a positive displacement piston pump, to an in-line homogeniser or colloid mill 33. The mill exerts sufficient shear stress to break down the gel structure thus reducing the viscosity of the material which is then fed, preferably via a deaeration unit 34, to an applicator head 35 for injection into the cable.

The head is shown in detail in Fig. 4 and is adapted to receive an unsheathed cable 36 to be filled. The blocking material is supplied under pressure via an inlet pipe 37 to a primary pressure chamber 38. This chamber is closed by seals 39, 40 through which the cable 36 is fed. A further pair of seals 61,62 define respective secondary or low pressure chambers 43,44, each of which has an outlet 45,46 whereby excess or unused blocking material is returned via a pipe 47 to the storage drum.

Various modifications of the apparatus of Fig. 3 and 4 are envisaged. Thus, if a pump providing sufficient shear is employed, the homogeniser may be dispensed with. Also the deaerater may be located in the return feed line to the storage tank.

Once the cable has been filled the gel structure is rapidly reformed and a permanent water block is provided. Also, as the gel properties are exhibited over a wide temperature range, the filled cable is suitable for arctic, temperate or tropical applications.

An alternative applicator head is shown in Fig. 5. The head comprises a tubular chamber 51 provided with a plurality of annular seals 52 through which the cable 36 is fed. The seals are a close fit on the cable and thus maintain fluid pressure in the central portion of the chamber 51. The water blocking material is supplied to the chamber 51 via an inlet 53 and surplus material is returned via outlets 54 disposed between the outer pairs of seals 52.

The chamber 51 is of slightly larger diameter than the cable 36 so that, when the cable is drawn through the filled chamber a high shear is applied to the adjacent water blocking material thus breaking down its gel structure and lowering its viscosity. This then allows the material to penetrate the cable. Advantageously the surplus material is passed through a deaerater before being returned to the storage tank.

When using the applicator head of Fig. 5 it is not of course necessary to break down the gel prior to application to the cable. The material may be pumped as a gel into the applicator where its viscosity is reduced by the shearing action of the moving cable.

Advantageously the filling apparatus is arranged in tandem with a plastics extruder. Typically the techniques described herein are employed with telecommunication cables but they may of course be extended to use with power cables. The compounds are particularly suitable for use with optical fibre cables, e.g. of the slotted core type, and as splice fillers.

CLAIMS:-

1.      A water blocking compound for a cable, the compound being hydrophobic and having thixotropic properties such that the viscosity of the compound may be temporarily reduced by mechanical shearing, characterised in that the compound includes a base fluid comprising a synthetic oil or a mixture of synthetic and mineral oils, and a thixotropic agent comprising a hydrophobic silica, bentonite or mixtures thereof.

2.      A water blocking compound as claimed in claim 1, characterised in that the synthetic oil comprises at least 50% of the base fluid.

3.      A water blocking compound as claimed in claim 1, characterised in that the synthetic oil is the sole constituent of the base fluid.

4.      A water blocking compound as claimed in claim 1, 2 or 3, characterised in that the synthetic oil is a poly-$\alpha$-olefin, a silicone oil or mixtures thereof.

5.      A water blocking compound as claimed in any one of claims 1 to 4, characterised in that the compound contains from 5 to 20 parts by weight of hydrophobic silica for each 100 parts by weight of the base fluid.

6.      A water blocking compound as claimed in claim 5, characterised in that the compound contains from 10 to 17 parts by weight of hydrophobic silica.

7.      A water blocking compound as claimed in any one of claims 1 to 4, characterised in that the compound contains from 2 to 10 parts by weight of bentonite for each 100 parts of the base fluid.

8.      A water blocking compound as claimed in any one of claims 1 to 7, characterised in that the compound contains a polarising agent.

9.      A water blocking compound as claimed in claim 8, characterised in that the polarising agent comprises propylene carbonate.

10.      A water blocking compound as claimed in any one of claims 1 to 9, characterised in that the compound contains powdered PTFE.

11.     A cable containing a compound as claimed in any one of claims 1 to 10.

12.     A cable as claimed in claim 11 and comprising an optical fibre cable.

13.     An apparatus for water blocking a cable with a thixotropic hydrophobic material, the apparatus including means for mechanically shearing the material, and means for injecting the sheared material into a cable.

14.     An apparatus for water blocking a cable with a thixotropic hydrophobic material, the apparatus including a pressure chamber, means for supplying the material to the pressure chamber, and means for drawing the unsheathed cable through the chamber whereby relative movement between the cable and the material in the chamber provides a viscosity-reducing shear to allow flow of the material into the cable.

15.     An applicator for applying a thixotropic water blocking material to an unsheathed cable, characterised in that the apparatus includes an elongate tubular chamber through which, in use, the cable is fed, that means are provided for supplying the compound under pressure to said chamber whereby the cable is filled with a compound, that a first pair of end seals provide sealing between the cable and the chamber whereby fluid pressure is maintained in the chamber, that a further pair of end seals define, with said first pair, secondary chambers one at each end of the tubular chamber, and that means are provided for removing excess compound from the secondary chambers.

0182530

1/3

Fig.1.

ADDITIVES
AND
THICKENER

Fig.3.

# Fig.2.

21

22

23

24

25 &larr; ADDITIVES

26

27 &larr; THICKENER

28

29

30

31

*Fig.4.*

*Fig.5.*